# DEMANDE DE BREVET EUROPEEN

(11) **EP 1 251 625 A1**
(43) Date de publication de la demande: **23.10.2002**
(21) Numéro de dépôt: 02290955.0
(22) Date de dépôt: 16.04.2002
(51) Int. Cl.: H02K 3/28, H02K 15/02, H02K 5/04, H02K 16/04

(54) **Stator de machine électrique**

(30) Priorité: 17.04.2001 EP 01400981; 10.07.2001 FR 0109180
(71) Demandeur: MOTEURS LEROY-SOMER, 16000 Angouleme (FR)
(72) Inventeur: Gauthier, Pascal, 16290 Asnieres-sur-Nouere (FR); Saint-Michel, Jacques, 16000 Angouleme (FR); Gilles, Christophe, 16000 Angouleme (FR); Jadeau, Laurent, 16110 La Rochefoucauld (FR)
(74) Mandataire: Tanty, François

(57) **Abrégé**

La présente invention concerne un stator de machine tournante électrique, comportant un circuit magnétique ayant des dents constituant chacune le noyau d'une bobine (B1, ..., B12), connectées électriquement entre elles de manière à former deux ensembles électriques indépendants (B1, ..., B6 ; B7, ..., B12), associés chacun à une moitié de stator.

## Description

La présente invention concerne les machines électriques tournantes et plus particulièrement leur stator.

Il existe un besoin pour disposer d'une machine électrique qui puisse continuer à fonctionner même en cas de défaillance de l'un des enroulements du stator.

Il existe également un besoin pour disposer d'une machine dont le stator puisse être réalisé facilement.

Il existe encore un besoin pour permettre une réparation rapide de la machine.

L'invention vise à répondre à tout ou partie de ces besoins.

Elle y parvient grâce à un nouveau stator de machine tournante électrique, comportant un circuit magnétique ayant des dents constituant chacune le noyau d'une bobine, caractérisé par le fait que les bobines sont connectées électriquement entre elles de manière à former deux ensembles électriques indépendants, associés chacun à une moitié de stator.

Grâce à l'invention, il est possible de réaliser une machine tournante électrique qui puisse fonctionner en mode dégradé, c'est-à-dire en alimentant l'un seulement des deux ensembles électriques indépendants.

En particulier, l'invention permet de faire fonctionner en mode dégradé une machine synchrone comportant un rotor à aimants permanents, notamment un rotor à concentration de flux.

Ainsi, lorsque la machine entraîne une installation frigorifique par exemple, il est possible de continuer à faire fonctionner cette installation dans l'attente d'un remplacement de la partie défaillante.

Par ailleurs, le fait que le stator comporte deux ensembles électriques indépendants associés chacun à une moitié du stator facilite grandement la fabrication de celui-ci puisqu'il est possible, par exemple, de connecter électriquement les bobines avant leur mise en place sur le stator, voire de disposer des bobines de chaque ensemble sur un demi-circuit magnétique de stator rectiligne, de les connecter électriquement entre elles, puis de cintrer le demi-circuit magnétique de manière à lui donner sa forme demi-circulaire définitive.

Le fait d'avoir deux ensembles électriques indépendants, associés chacun à une moitié de stator, permet également de ménager entre les faisceaux de câbles associés aux deux moitiés de stator un espace permettant le passage de câbles supplémentaires, reliés à des capteurs de position fixés sur les dents, par exemple.

Le circuit magnétique peut être formé par l'assemblage d'au moins deux secteurs ; en particulier, le circuit magnétique peut être formé par l'assemblage de deux demi-circuits magnétiques.

Le circuit magnétique est avantageusement logé dans une culasse séparable en deux moitiés.

En réalisant le circuit magnétique avec deux demi-circuits magnétiques et la culasse avec deux demi-culasses, il est possible de démonter facilement le stator en deux parties, et de ne remplacer par exemple, en cas de dysfonctionnement de l'une des parties, que celle-ci. Le démontage du stator peut notamment se faire sans qu'il y ait à démonter le rotor.

Dans une réalisation particulière, chaque ensemble électrique comporte des bobines reliées en parallèle.

Les bobines peuvent être connectées électriquement à des câbles gainés partiellement dénudés, et notamment être connectées auxdits câbles en retrait des extrémités libres de ces derniers, de façon à garder un bout de gaine empêchant les brins du câble de se séparer.

L'un des ensembles électriques peut comporter trois câbles de sortie et l'autre ensemble électrique comporter six câbles de sortie.

Le stator peut comporter au moins un capteur à effet Hall fixé sur une dent, du côté de la sortie des câbles reliés aux bobines.

Selon un aspect de l'invention, le nombre de paires de pôles est pair. Le nombre de pôles peut être égal à 8, 12, 16 ou 32, par exemple.

L'invention a encore pour objet une machine comportant un stator tel que défini plus haut.

Une telle machine peut constituer un moteur. Le rotor peut être à aimants permanents et à concentration de flux.

La machine comporte avantageusement des moyens de commande permettant un fonctionnement en mode dégradé, avec l'un des deux ensembles électriques seulement.

L'invention a encore pour objet un procédé de fabrication d'un stator tel que défini plus haut, caractérisé par le fait qu'il comporte l'étape suivante :
- relier électriquement entre elles les bobines de chaque ensemble électrique avant leur montage sur le circuit magnétique, ou
- monter chaque bobine sur une dent d'un secteur magnétique puis mettre ce secteur magnétique en place sur le stator.

Les bobines de chaque ensemble électrique peuvent notamment être montées sur un demi-circuit magnétique.

Dans une mise en oeuvre de l'invention, le procédé comporte en outre l'étape, après montage des bobines de chaque ensemble électrique sur un demi-circuit magnétique, d'assemblage des deux demi-circuits magnétiques.

On peut disposer les bobines de chaque ensemble électrique sur des tôles rectilignes d'un demi-circuit magnétique et cintrer ces tôles pour leur donner une forme demi-circulaire.

D'autres caractéristiques et avantages de la présente invention ressortiront à la lecture de la description détaillée qui va suivre, d'un exemple non limitatif de mise en oeuvre, et à l'examen du dessin annexé, sur lequel :
- la figure 1 représente de manière schématique en vue de dessus dans l'axe du rotor, un moteur synchrone comportant un stator conforme à l'invention,
- la figure 2 est un schéma de connexion des différentes bobines du stator,
- la figure 3 est un schéma électrique équivalent,
- la figure 4 illustre le découpage des tôles du circuit magnétique de manière à minimiser les chutes, et
- la figure 5 représente un ensemble électrique en place sur le circuit magnétique du stator.

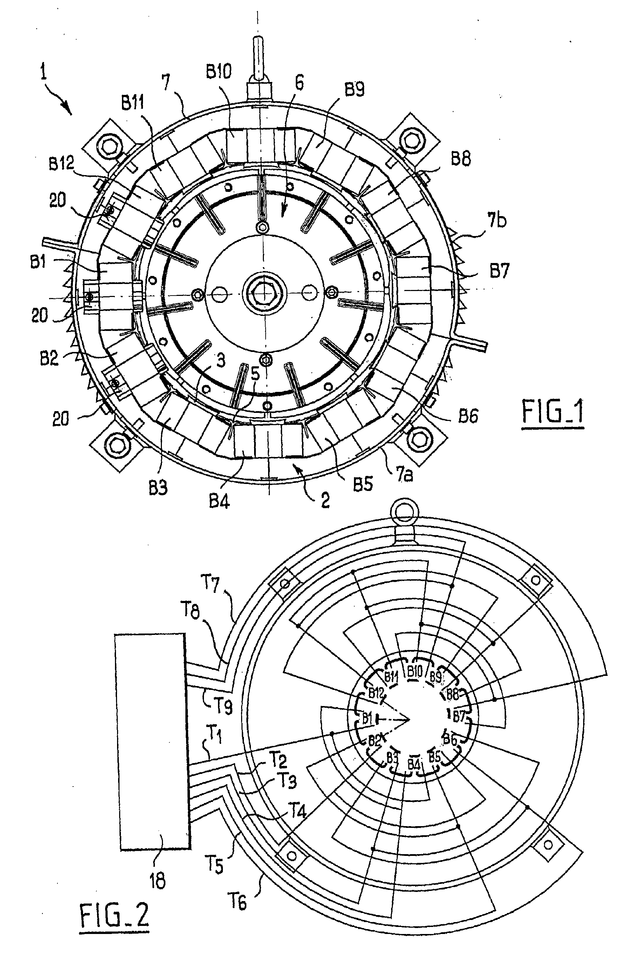

La machine électrique 1 représentée partiellement sur la figure 1 est un moteur synchrone comprenant un stator 2 et un rotor intérieur 6 à aimants permanents et à concentration de flux.

Le stator 2 est à huit pôles, le moteur étant destiné à être alimenté en courant triphasé, et comporte douze dents 3 sur lesquelles sont montées douze bobines respectives, référencées B1 à B12. Chaque dent 3 constitue ainsi le noyau d'une bobine correspondante B1, ..., B12. Ces dernières sont maintenues engagées sur les dents 3 par des cales 5, glissées dans des encoches 4 formées sur les côtés des dents 3.

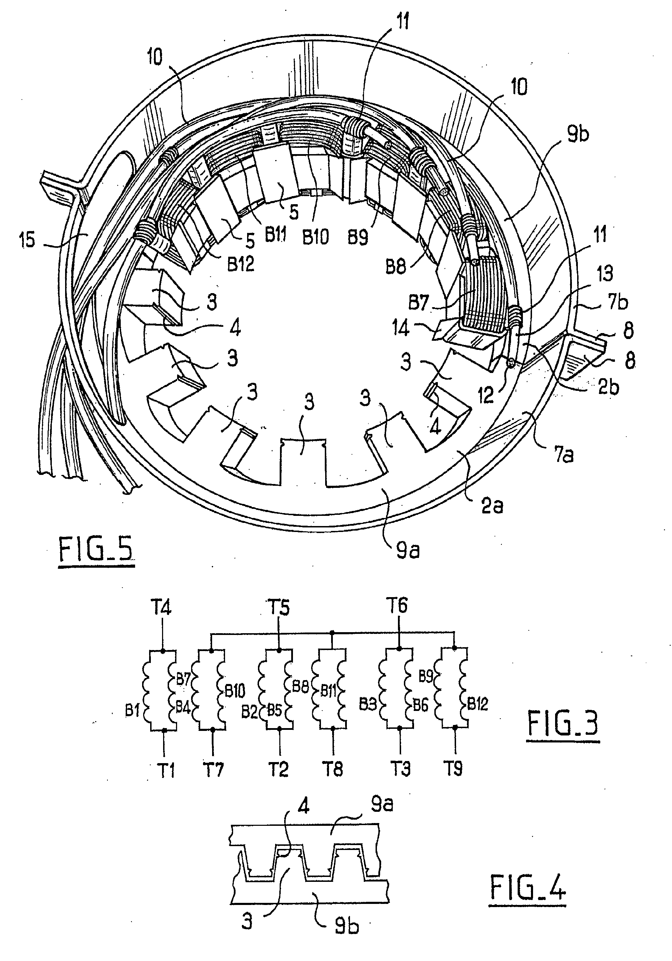

Dans l'exemple considéré le stator 2, comme on peut le voir sur la figure 5 notamment, comporte deux demi-circuits magnétiques 2a, 2b, comprenant chacun six dents 3. Ces dernières peuvent présenter, hormis les encoches 4, une largeur constante ou légèrement décroissante en direction de l'axe du rotor, afin de permettre dans ce dernier cas un certain effet de coincement des bobines B1, ..., B12 sur les dents 3.

Les deux demi-stator 2a et 2b sont logés dans une culasse 7 formée de deux demi-culasses 7a et 7b assemblées au moyen de brides 8.

Les douze bobines B1, ..., B12 sont reliées électriquement entre elles par des câbles gainés 10 de manière à former deux ensembles électriques indépendants comportant chacun six bobines, à savoir un premier ensemble comprenant les bobines B1, ..., B6 et un deuxième ensemble comprenant les bobines B7, ..., B12. Les bobines B1, ..., B12 sont connectées de la manière représentée à la figure 2, selon une configuration dite à deux voies parallèles, dont on a donné sur la figure 3 le schéma électrique équivalent.

Les câbles 10 sont partiellement dénudés aux endroits où les extrémités 11 des conducteurs électriques B1, ..., B12 des bobines doivent être soudés aux brins des câbles. On peut voir que les extrémités 11 des bobines B1, ..., B12 se situent en retrait des extrémités libres 12 des câbles 10, de manière à laisser sur chaque câble 10 une portion gainée 13 terminale permettant d'éviter que les brins de ce câble ne se séparent. Sur la figure 5, on voit des feuilles 14 d'isolant, placées entre les dents 3 et les bobines lors du montage de ces dernières sur le circuit magnétique. Une ouïe 15 est réalisée dans la culasse 7 pour la sortie des câbles 10.

On a référencé T1, ..., T6 les six câbles 10 reliés aux bobines B1, ..., B6 et T7, ..., T9 les trois câbles 10 reliés aux bobines B7, ..., B12. On remarquera à l'examen de la figure 3 que les bobines B1 et B4 sont reliées en parallèle et ont leurs bornes reliées respectivement aux câbles T1 et T4. Les bobines B2 et B5 sont reliées en parallèle et ont leurs bornes reliées respectivement aux câbles T2 et T5. Les bobines B3 et B6 sont reliées parallèles et ont leurs bornes reliées respectivement aux câbles T3 et T6. Les bobines B7 et B10 sont reliées en parallèle, de même que les bobines B8 et B11 et les bobines B9 et B12, ces trois paires de bobines ayant des bornes reliées respectivement aux câbles T7, T8 et T9 et les autres bornes opposées reliées à un point commun.

Les câbles T1, ..., T9 sont reliés à des moyens de commande 18 agencés de manière à contrôler l'excitation des bobines B1, ..., B12 de façon à créer un champ magnétique tournant d'entraînement du rotor.

Des capteurs 20 à effet Hall sont fixés sur les dents 3 respectivement associées aux bobines B1, B2 et B12, et les câbles reliés à ces capteurs peuvent facilement traverser l'ouïe 15 dans l'espace laissé entre les deux faisceaux de câbles T1, ..., T6 et T7, ..., T9.

Dans l'exemple de réalisation décrit, les moyens de commande 18 sont également agencés pour permettre au moteur de fonctionner en mode dégradé, c'est-à-dire avec l'un seulement des ensembles B1, ..., B6 ou B7, ..., B12. Ainsi, en cas de défaillance de l'une des bobines d'un ensemble, il est possible de continuer à faire fonctionner le moteur en coupant l'alimentation de l'ensemble défaillant.

De plus, le stator peut être séparé en deux sans avoir à démonter le rotor, ce qui facilite le remplacement de l'ensemble défaillant.

Le stator qui vient d'être décrit est également de construction plus facile, puisqu'il est plus aisé de réaliser les connexions électriques des bobines B1, ..., B6 ou B7, ..., B12 de chaque ensemble avant leur mise en place sur les dents 3.

Par ailleurs, le circuit magnétique 9a ou 9b de chaque demi-stator 2a ou 2b peut être réalisé par la superposition de tôles magnétiques découpées à l'état rectiligne, comme illustré sur la figure 4, par paires, les dents de chaque paire s'imbriquant entre elles, ce qui permet de minimiser les chutes de matière. Les bobines peuvent, le cas échéant, être montées sur les dents 3 avant cintrage de ces tôles. Dans ce cas, les bobines seront de préférence connectées électriquement au moyen des câbles 10 avant l'opération de cintrage.

Bien entendu, l'invention n'est pas limitée à l'exemple de réalisation qui vient d'être décrit.

On peut notamment réaliser le stator avec plus de douze dents, notamment lorsque le nombre de pôles est égal à 12, 16 ou 32, par exemple.

## Revendications

1. Stator (2) de machine tournante électrique, comportant un circuit magnétique (9a, 9b) ayant des dents (3) constituant chacune le noyau d'une bobine (B1, ..., B12), **caractérisé par le fait que** les bobines sont connectées électriquement entre elles de manière à former deux ensembles électriques indépendants (B1, ..., B6 ; B7, ..., B12), associés chacun à une moitié de stator (2a ; 2b).

2. Stator selon la revendication 1, **caractérisé par le fait que** chaque ensemble comporte des bobines reliées en parallèle.

3. Stator selon l'une des revendications 1 et 2, **caractérisé par le fait que** le circuit magnétique est formé par l'assemblage d'au moins deux secteurs.

4. Stator selon la revendication précédente, **caractérisé par le fait que** le circuit magnétique est formé par l'assemblage de deux demi-circuits magnétiques (9a, 9b).

5. Stator selon l'une quelconque des revendications précédentes, **caractérisé par le fait que** le circuit magnétique (9a, 9b) est logé dans une culasse (7) séparable en deux moitiés (7a, 7b).

6. Stator selon l'une quelconque des revendications précédentes, **caractérisé par le fait que** les bobines (B1, ..., B12) sont connectées électriquement à des câbles gainés (10) partiellement dénudés.

7. Stator selon la revendication précédente, **caractérisé par le fait que** les bobines sont connectées aux câbles (10) en retrait des extrémités libres des ces derniers.

8. Stator selon l'une quelconque des revendications précédentes, **caractérisé par le fait que** l'un des ensembles comporte trois câbles de sortie (T7, ..., T9) et l'autre ensemble comporte six câbles de sortie (T1, ..., T6).

9. Stator selon l'une quelconque des revendications précédentes, **caractérisé par le fait qu'**il comporte au moins un capteur (20) à effet Hall fixé sur une dent (3) du côté de la sortie des câbles (10) reliés aux bobines.

10. Stator selon l'une quelconque des revendications précédentes, **caractérisé par le fait que** le nombre de paires de pôles est pair.

11. Stator selon l'une quelconque des revendications précédentes, **caractérisé par le fait que** le nombre de pôles est égal à 8, 12, 16 ou 32.

12. Machine (1) comportant un stator tel que défini dans l'une quelconque des revendications précédentes.

13. Machine selon la revendication précédente, **caractérisée par le fait qu'**elle constitue un moteur.

14. Machine selon l'une des deux revendications précédentes, **caractérisée par le fait que** le rotor est à aimants permanents et à concentration de flux.

15. Machine selon l'une quelconque des revendications 12 à 14, **caractérisée par le fait qu'**elle comporte des moyens de commande (18) permettant un fonctionnement en mode dégradé, avec l'un des deux ensembles (B1, ..., B6 ; B7, ..., B12) seulement.

16. Procédé de fabrication d'un stator tel que défini dans l'une quelconque des revendications 1 à 11, **caractérisé par le fait qu'**il comporte l'étape suivante :
- relier électriquement entre elles les bobines (B1, ..., B6 ; B7, ..., B12) de chaque ensemble avant leur montage sur le circuit magnétique, ou
- monter chaque bobine sur une dent (3) d'un secteur magnétique (9a, 9b) puis mettre ce secteur magnétique en place sur le stator.

17. Procédé selon la revendication précédente, **caractérisé par le fait que** les bobines de chaque ensemble sont montées sur un demi-circuit magnétique (9a ; 9b).

18. Procédé selon l'une des deux revendications précédentes, **caractérisé par le fait qu'**il comporte l'étape, après montage des bobines de chaque ensemble sur un demi-circuit magnétique, d'assemblage des deux demi-circuits magnétiques (9a ; 9b).

19. Procédé selon l'une quelconque des revendications 16 à 18, **caractérisé par le fait que** l'on dispose les bobines de chaque ensemble sur des tôles rectilignes d'un demi-circuit magnétique et **par le fait que** l'on cintre ces tôles pour leur donner une forme demi-circulaire.
